# EUROPEAN PATENT APPLICATION

(11) **EP 1 484 727 A1**
(43) Date of publication of application: **08.12.2004**
(21) Application number: 04012497.6
(22) Date of filing: 26.05.2004
(51) Int. Cl.: G08B 21/02

(54) **Position movement alarm system**

(30) Priority: 02.06.2003 JP 2003156422
(71) Applicant: Kainzu Kabushikikaisha, Tokyo (JP)
(72) Inventor: Kaneko, Masao, Ichikawa-shi Chiba-ken (JP)
(74) Representative: Barz, Peter

(57) **Abstract**

When a child, a wanderer or a pet animal under a control of a person in parental authority, relatives or a pet owner moves by some reason, the fact that the managed person such as child, wanderer or a pet animal move from its old position is transferred to cellular phone terminal of the manager by means of a position movement alarm system using GPS satellites and cellular phone system. The fact is transferred from a position information monitor · alarm terminal carried by the managed person to the cellular phone carried by the manager through a cellular phone circuit and no third person such as alarm center or service center.

## Description

### Field of the Invention

The present invention relates to a position movement alarm system for, when a child or a wandering person or a wandering animal (hereinafter, called the managed person or the like) managed or controlled by a person in parental authority, a relative, a keeper of animal and the like having a cellular phone terminal provided with a GPS(global positioning system) satellite data processing function (hereinafter, it is called a manager or the like) moves to a position or place the manager or the like doesn't hold, or when the managed person or the like wants to inform intentionally his position to the manager or the like, transmitting the fact that the managed person or the like moves from the original or old place to the manager or the like or the present position of the managed person or the like by means of GPS or a cellular phone system.

Also, the present invention relates to a position movement alarm system for informing the present position of the managed person or the like to the manager or the like, as well giving an alarm around the managed person or the like in order to cope with promptly the emergency.

### Description of the Prior Art

Conventionally, position information informing systems using GPS and a cellular phone system have been used in various forms and a number of the systems carry out their information transmitting between the position information receiver and a position information transmitting terminal (hereinafter, it is called terminal)through a third person such as alarm center or a service center and the like.

If the information transmitting is carried out through no third person, there is no system of this kind automatically informing any change of the terminal position from the terminal side.

As a result, when the information transmitting is carried out through the conventional third person such as an alarm center or the service center and the like, considerable cost and work are necessary to operate such information transmitting system, so it is difficult to use simply and easily such information transmitting system.

### [Summary of the Invention]

In order to solve the problems above-mentioned, the present invention provides a position movement alarm system for informing, when the managed person or the like under control of the manager or the like moves to a position the manager or the like fails to hold or when the managed person or the like wants intentionally to inform his own position to the manager or the like, the fact that the managed person or the like moves from his original or last position, or the present position of the managed person or the like to the manager or the like from the managed person position information monitor · alarm terminal by means of a position movement alarm system using GPS and a cellular phone system through no third person such as alarm center or a service center and the like and use of a cellular phone circuit. Additionally, the present invention provides a position movement alarm system enabling, when the managed person or the like encounters emergency happenings such as a crime, to inform the present position of the managed person or the like to the manager or the like, as well to issue an alarm around the managed person or the like so as to cope with promptly the emergency happening.

The first object of the present invention is to provide a system for informing, when the managed person or the like such as a child or a wandering person or a wandering animal under control of the manager or the like such as a person in parental authority, a relative, a keeper of an animal moves to a position the manager or the like fails to hold, the fact that the managed or the like moves from the last position to the manager or the like automatically and directly, so as to make promptly the manager known of the fact of a movement of the managed person or the like and coped with the fact by protecting the managed person or the like economically and easily.

The second object of the present invention is to provide an exceedingly economical system enabled to receive signals from GPS satellite and use at every places in which cellular phone circuit can be available.

The third object of the present invention is to provide a system enabled to attain a crime prevention purpose by means of an installation of an emergency informing buzzer, as well to cope with promptly the emergency by means of a co-installation of an ON/OFF exchanging switch for sounding of the buzzer in order to inform a happening and a position of the emergency without a criminal knows the information transmission.

The object above and other objects and novel characteristics of the present invention will be apparent after reading the detail explanation below with reference to the accompanying drawings. The drawings have the purpose of exclusively explaining the present invention and don't restrict a scope of the invention.

### [Brief Description of the Drawings]

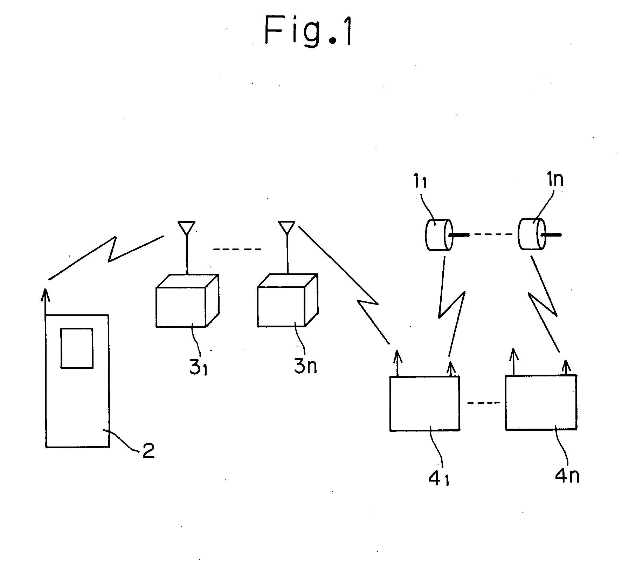

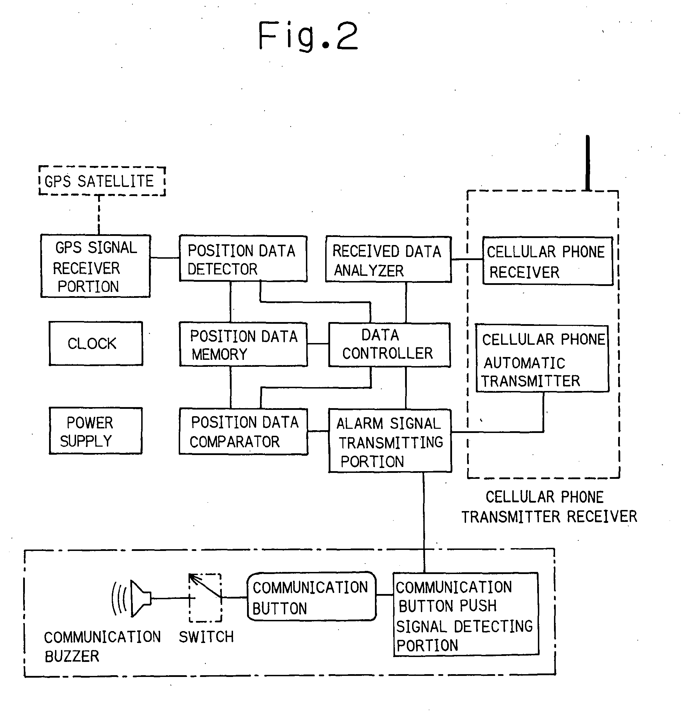

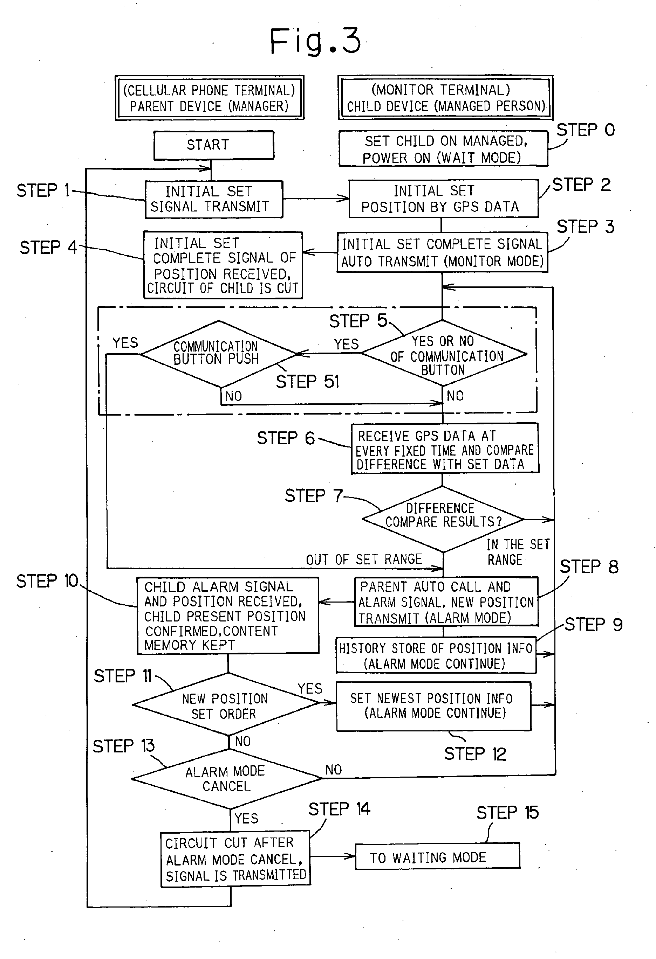

Fig 1 shows a network structure view of the position movement alarm system according to the present invention. Fig 2 is an explanation view of a member structure of a position information monitor · alarm terminal structuring the position movement alarm system of the present invention. Fig 3 is a flowchart of the position movement alarm system of the present invention.

### [Description of the Preferred Embodiment]

The present invention relates to a system for informing automatically and directly, when the managed person or the like places out of the range the manager or the like can monitor and the managed person or the like moves, wanderers or the like, or when the managed person or the like encounters, for example, with an emergency situation such as crimes and he wants to inform intentionally his own position to the manager or the like, the fact that the managed person or the like moves from the last position or the present position of the managed person or the like to the cellular phone terminal of the manager or the like (hereinafter, it is called parent device) provided with GPS position information processing function from a position information monitor · alarm terminal (hereinafter, it is called child device) of the managed person or the like by means of a cellular phone circuit and no third person such as an alarm center or a service center and the like.

Fig 1 shows a network structure view of the position movement alarm system of the present invention. As shown in Fig 1, the manager or the like uses a parent device 2 having a processing function for the position information transmitted from GPS satellites 1ₗ-1n and a network (cellular phone base stations 3ₗ-3n) of the cellular phone company in order to carry out a particular communication using a cellular phone circuit between the parent device 2 and a child device 4 and using no third person such as an alarm center or a service center or the like. A communication between the parent device 2 and a child device 4 can be done at everywhere in which the network of the cellular phone company can be used. Further, it is possible to carry out respective communication between one parent device 2 and a plurality of child devices 4ₗ-4n

Fig 2 is a block diagram showing a member structure of child device forming the position movement alarm system according to the present invention. By the way, a block diagram of child devices of a type having "communication button" is conveniently in explanation shown. Two types of one having "communication button" and of one having no "communication button" are shown and will be explained.

As shown in Fig 2, the child devices 4 receive radio wave transmitted from a plurality of GPS satellites 1ₗ-1n through GPS signal receivers of the devices. A position data detector of the child device 4 detects a position of the device 4 itself and a position data detected are memorized in a memory of a position data memory portion. While, a cellular phone receiver portion receives cellular phone signal from the parent device 2. A cellular phone automatic transmitter transmits automatically radio wave to the parent device 2 by means of a cellular phone circuit.

Instruction information from the parent device 2 having a cellular phone receiver portion is analyzed in its content by means of a received data analyzer portion, and a data control portion carry out a control operation according to the content. When the child device 4 receives an initial setting signal from the parent device 2, the data control portion instructs the position data memory portion so as to memorize the newest or last position data in the initial setting memory, as well to compare the new position data continuously detected and the initial setting position data in the position data comparator.

When the position data comparator finds that the differential comparison result is more than the previously set value (for example, 50m), the data control portion instructs the alarm signal transmitter portion so as to transmit an alarm signal and the newest position data to the cellular phone automatic transmitter portion.

When the child device 4 has a communication button, an emergency communication buzzer adapted to sound cooperatively with a pushing of the communication button is installed in the child device 4, an ON/OFF exchanging switch adapted to make the emergency communication buzzer sound is installed, and the exchange switch is kept at ON condition, an emergency happening such as crimes occurs, and the communication button is pushed, the child device 4 transmits an alarm signal and the newest portion data to the parent device 2 informing the manager or the like.

The emergency communication buzzer of the child device 4 held by the managed person or the like sounds around the managed person or the like, informing a happening of the emergency condition. On the contrary, when the exchange switch is OFF, the emergency communication buzzer doesn't sound and it is possible to inform the manager or the like of the fact that the managed person or the like is under an abnormal situation.

Then, the cellular phone automatic transmitting portion received information transmits automatically and calls the parent device 2 through the cellular phone circuit, and sends an alarm signal and the newest position information of the child device 4 to the parent device 2. Additionally, the clock portion and power supply portion are a common block used to supply clock signals and power to each block above.

Next, a flowchart of the position movement alarm system of the present invention is shown in Fig 3, in which the flowchart is of a type provided with "communication button". Hereinafter, both types of flowcharts having "communication button" and having no "communication button" will be explained.

First, in order to make the manager or the like recognize that the managed person or the like moves from or leaves the old position due to some reason such as wandering or the like, the managed person or the like has a position information monitor · alarm terminal (child device)4. The child device 4 hold by the managed person or the like enters its waiting mode after its power switch turns ON (STEP 0). In such waiting mode, the child device 4 receives signals from GPS satellite 1 at a predetermined interval (for example, 30 minutes) and memorizes its own position information.

While the child device 4 is under its waiting mode of STEP 0, the manager and the like uses the cellular phone terminal (parent device 2) in order to transmit an initial setting signal of position information to the child device 4, making the child device 4 set at its monitoring mode(STEP 1). In STEP 1, the child device 4 received the initial setting signal of the parent device 2 registers its own newest position information which has been received from GPS satellites 1ₗ-1n, in an initial setting memory as an initial setting value (STEP 2).

The child device 4 after its initial setting memory registers the newest position information in STEP 2 automatically transmits an initial setting complete signal of the position information to the parent device 2 and enters its monitoring mode (STEP 3). Then, the manager or the like uses the parent device 2 received an initial setting complete signal from the child device 4 cuts the circuit to the child device 4 after the manager or the like confirms that the child device 4 has entered its monitor mode, and waits (STEP 4).

In case that the child device 4 has a communication button (STEP 5) and the managed person and the like pushes the button of the child device 4 in its monitor mode (STEP 51), it goes to STEP 8. When the child device 4 doesn't have such communication button, it doesn't to STEP 5 and go to STEP 6.

The child device 4 under a monitor mode receives signals from GPS satellites 1ₗ-1n at every previous determined time (for example, 10 minutes) calculates its own position data, and compares the initial set position data and the own position data (STEP 6). In STEP 6, when the comparing distance between two position data (STEP 7) is in a set range, for example, of 50m from the initial set value, an operation of STEP 6 is repeated. The set range is determined in consideration of an error of the previously set value of GPS. If the comparing distance between two position data is more than the previously determined value (out of set range), it transfers to the next STEP 8.

When the resultant difference of two position data obtained in STEP 7 is over the previously set value or the communication button of the child device 4 is pushed, and no cellular phone circuit is established between the child device 4 and parent device 2, the parent device 2 automatically is called. When a cellular phone circuit is established between two devices and the circuit is held, the child device 4 sends an alarm signal informing that the initial set value of the position information is differed from the newest value, or communication button pushing signal and a present position information of the child device 4 to the parent device 2 entering its alarm mode (STEP 8).

In STEP 8, the child device 4 in its alarm mode repeats the operation after STEP 6 until a new instruction comes from the parent device 2, and memorizes and keeps at every operation the history of the newest position information (STEP 9). In STEP 8, by means of the parent device 2 received an alarm signal of the child device 4, or a communication button pushing signal and a newest position information of the child device 4, the manager or the like confirms that the child device 4 is in alarm mode. Then, the manager or the like confirms the newest position information of the child device 4 by means of a map information processing function or the like of the parent device 2 and memorizes the newest position information in the parent device 2 (STEP 10).

In case of "YES" in which the manager or the like resets the newest position information of the child device 4 as a new initial set value, the manager or the like transmits a signal for resetting the newest position information of the child device 4 as an initial set value to the child device 4 (STEP 11). The child device 4 received a signal for resetting the newest position information of the child device 4 as an initial set value from the parent device 2 resets its own newest position information which has been received in an initial set memory as an initial set value, and keeps continuously its alarm mode (STEP 12).

While, in STEP 10, in case of "NO" for instructing the child device 4 of no setting of a new position information after the manager or the like confirms a newest position information of the child device 4 and the manager or the like wants to continuously obtain the newest position information of the child device 4, an alarm mode is kept and a cellular phone circuit is held between devices (STEP 13).

In case of "YES" at STEP 13, in which the manager or the like wants to cancel the alarm mode of the child device 4 which is set in STEP 8, the parent device 2 transmits an alarm mode canceling signal to the child device 4 cutting the cellular phone circuit (STEP 14), and attaining an initial condition (start).

Further, in STEP 13 and in case of "NO" not canceling an alarm mode, the child device 4 in its alarm mode repeats the operations after STEP 6, memorizes at every operation the history of the newest position information, and holds the history.

Last, in STEP 14, the child device 4 received an alarm mode canceling signal from the parent device 2 clears the initial set information, transfers to a waiting mode (STEP 15), and returns to STEP 0.

That is, according to the position movement alarm system of the present invention, the manager or the like makes the managed person or the like have a child device 4, whom the manager or the like want to confirm its position, makes a power switch of the child device 4 ON and set at its waiting condition.

The child device 4 held by the managed person or the like receives radio wave from GPS satellites 1ₗ-1n at the previously set time, (for example, every 30 minutes), recognizes its own position information and memorizes the position information.

When the manager or the like wants to set the child device 4 of monitor mode, the parent device 2 having a function for processing position information from GPS satellites 1ₗ-1n is used, and cellular phone circuit is used in order to send position information initial set instruction signal to the child device 4. The child device 4 received the position information initial set instruction signal of the parent device 2 registers the newest position information memorized in the child device 4 in the initial set memory as an initial set value, receives radio wave from GPS satellites 1ₗ-1n continuously and regularly at every predetermined time, (for example. 10 minutes), and compares differences between the initial value and the position at every time.

If the comparison result is over the predetermined error range (for example, 50m) or crime and the like happens and the managed person or the like pushes the communication button of the child device 4, the cellular phone circuit functions automatically and the parent device 2 is connected as a result knowing an alarm signal or communication pushing signal and new position information. As a result, the manager or the like knows the fact that the managed person or the like has moved or left from the old position, or the present position of the managed person or the like pushed the communication button. The manager or the like knowing that the managed person or the like has moved to the old position by means of the communication owing to some reasons such as wandering or the like, or supposing that abnormal condition is happened on the managed person or the like due to a communication button pushing promptly informs the police station. coping with a protection of the manager or the like.

Owing to that an abnormal condition informing buzzer is so installed on the child device 4 as to sound in cooperation with a pushing of communication button, when the managed person or the like carrying the child device 4 happens to encounter with some abnormal accidents such as crime and the like, the managed person or the like pushes the communication button to sound the abnormal or emergency informing buzzer making an alarm and preventing the crime from continuing and attaining a purpose of crime prevention.

The present invention has the structure above and the following effects.

The position movement alarm system of the present invention is adapted to automatically and directly inform, when the managed person or the like such as a child, a pet animal or wanderer under the control of a person in parental authority, a relative, an animal owner moves to a new position the manager or controller doesn't know, the fact of the movement above to the manager or the like by means of GPS and cellular phone system, from the child device the managed person or the like has through no third person such as alarm center or service center. Accordingly, it is possible to promptly know the fact of movement of the managed person or the like attaining a prompt protection of the managed person or the like without difficulty in handling and economic in cost of manufacturing and using.

Because, that the position movement alarm system of the present invention uses a plurality of child device identification signals, it is possible to structure a very economic system able to monitor simultaneously a plurality of child device by means of one parent device, receive a signal from a GPS satellite, and use in anywhere wherein the cellular phone circuit can be used.

Further, by means of the abnormal accident communication buzzer adapted to sound in cooperation with a communication buzzer pushing of the child device, it is possible to attain a crime prevention purpose. Also, by means of the ON/OFF exchange switch adapted to turn ON or OFF of the sounding of the abnormal accident communication buzzer installed on the child device, it is possible to inform any happenings of abnormal accident and the position of happening to the manager and the like and to cope with the happenings promptly.

## Claims

1. A position movement alarm system for, when the managed person or the like moves from its place the manager or the like recently held to its another place the manager or the like fails to hold, transmitting of the fact that the managed person or the like moves out of its original position and an alarm signal and a new position information from a position information monitor alarm terminal held by the managed person or the like and provided with a GPS satellite position information receiving function, a cellular phone receiving function and an automatic transmission function automatically and directly to the manager's cellular phone terminal provided with a processing function of the GPS position information by means of no third person such as an alarm center and the like.

2. A position movement alarm system for, when the managed person or the like places in a place out of the manager's monitor range and moves from its position, transmitting the fact that the managed person or the like moves from its old position and an alarm signal and a new position information from a position information monitor alarm terminal of its managed person or the like provided with a GPS satellite position information receiving function, a cellular phone receiving function and an automatic transmission function to a manager's cellular phone terminal provided with a GPS position information processing function automatically and directly by means of no third person such as an alarm center and a service center, wherein said position movement alarm system receives and stores position information of the GPS satellites at the previously set times, compares automatically the original set position information and a position information newly received of the GPS satellite at an instance appointed by the manager's cellular phone terminal provided with GPS position information processing function, when a difference between both the positions becomes more then an error range previously set, so as to automatically transmit an alarm signal and a new position information to the manager's cellular phone terminal provided with said GPS position information processing function.

3. The position movement alarm system of claim 1 or claim 2, wherein, when the managed person and the like wants to inform his present position to the manager and pushes a transmission button installed on the position information monitor · alarm terminal of the managed person or the like having a receiving function of position information transmitted from the GPS satellite, cellular phone receiving function, and an automatic transmission function, an alarm signal and a present position information are transmitted automatically and directly to the cellular phone terminal of the manager and the like provided with a processing function of GPS position information.

4. The position movement alarm system according to claim 3, wherein further comprising an emergency transmission buzzer adapted to sound in cooperation with a pushing of the transmission button.

5. The position movement alarm system according to claim 4, wherein further comprising a ON-OFF exchanging switch for sounding installed on the emergency transmission buzzer.
